# EUROPEAN PATENT APPLICATION

(11) **EP 0 711 998 A1**
(43) Date of publication of application: **15.05.1996**
(21) Application number: 95202922.1
(22) Date of filing: 27.10.1995
(51) Int. Cl.: G01N 27/447

(54) **Device for processing electrophoretic agarose supports**

(30) Priority: 14.11.1994 IT MI942297
(71) Applicant: HELENA LABORATORIES ITALIA S.p.A., I-20090 Assago (Milano) (IT)
(72) Inventor: Zeppa, Paolo, I-27015 Landriano (Pavia) (IT)
(74) Representative: Appoloni, Romano

(57) **Abstract**

A device for processing electrophoretic supports of agarose in which to agarose supports or strips, samples to be assayed have been applied which must be processed with suitable liquid processing means or reactants, which device comprises a framework (13) inside which at least a support plane (26) is provided which is suitable for receiving a carrier frame (11) designed to support a strip of agarose (12), and is vertically (i.e., upwards and/or downwards) movable by means of relevant drive means (27, 28, 29, 30), towards/from at least one overhanging plate element (35, 40, 60) with the latter being constrained to the framework (13) and being suitable for dispensing the treatment liquid processing means and/or reactants onto the at least one agarose support or strip (12), once that the carrier frame is brought into contact, under tight seal conditions, with said plate element.

## Description

The present invention relates to a device for processing the electrophoretic supports of agarose.

The presently used methods for processing electrophoretic supports, in particular of agarose, are performed in a nearly substantially manual way and not always do they allow optimal results to be obtained. In particular, the main drawbacks derive from inaccuracies arising during the steps of migration and subsequent processing of agarose support with antisera or suitable reactants.

Said methods are carried out according to a sequential modality, once that the samples or sera to be assayed have been applied to the agarose support and, by migration events, evidence a full set of bands which are then treated (i.e., stained) with the relevant reactants. It is important that the surface area of these work bands is determinated in a rather precise way in order to be able to assay the nearly totality of sample or serum, and obtain assay results which are as correct and complete as possible.

In fact, in the processing devices known from the prior art problems of electrical contact between the buffer solution and the agarose support arise in the migration chamber. Owing to such problems, lack of uniformity arises in current lines, with the migration of applied serum or sample consequently taking place irregularly. In that way, differences may appear in band lengths, or the bands may show an irregular shape.

Further drawbacks may arise also in the immediately following step in which, after the migration inside the electrophoretic chamber, a reaction is carried out with antisera or suitable preselected reactants of different natures.

During this step, problems arise which are correlated with the correct dispensing of antisera or reactants relatively to the band evidenced above.

For that purpose, template masks are used which bound the areas of the work bands. The use of these masks may sometimes be difficult and may not secure that boundaries will be accomplished which are sharp enough, because seepage may occur between bands, or the same mask can be positioned inaccurately relatively to the previously evidenced bands during the migration step. Furthermore, it should be selected bind dispensed the correct amounts of anti serum or reactant to the region of the bands -- which not always is easily done.

Summing-up, in the prior art methodologies used up to date, a number of problems arise owing to the manual application of both the masks and the antiserum or reactant.

In some semi-automatic devices, problems arise, on the contrary, which derive from the drive of the movable carrier relatively to the stationary application on members -- which problems cause difficulties in operating way. Furthermore, these semi-automatic devices which were developed in the past are anyway only suitable for processing supports, cards or strips of cellulose acetate or similar materials, and cannot be used to process agarose supports, owing to the particular nature of this support, which causes difficulties if one tries to process it according to an automatic procedure.

A purpose of the present invention is of providing a device which, besides automating the steps which constitute the method of electrophoretic treatment of migration and subsequent reaction with sera and reactants, simplifies and speeds up the whole procedure, making it possible agarose supports or strips to be processed during reduced processing times.

Another purpose is of making it possible the analysis of agarose strips to be carried with extreme reliability and with higher sensitivity results.

These and other purposes according to the present invention are achieved by providing a device for processing electrophoretic supports of agarose in which to said agarose supports or strips samples to be assayed have been applied which must be processed with suitable liquid processing means or reactants, which device is characterized in that said device comprises a framework inside which at least one support plane is provided which is suitable for receiving a carrier frame for supporting a strip of agarose and is vertically (i.e., upwards and/or downwards) movable by means of relevant drive means towards/from at least one overhanging plate element, with the latter being constrained to said framework and being suitable for releasing said liquid processing means and/or reactants onto the at least one agarose support or trip once that the carrier frame is brought into contact, under tight seal conditions, with said plate element.

The structural and functional features and the advantages inherently offered by a device for processing electrophoretic agarose supports according to the present invention will be better understood from the following exemplifying, non-limitative disclosure, referred to the accompanying schematic drawings, in which:
Figure 1 is a schematic longitudinal front elevational, partially sectional, view of a device for processing agarose electrophoretic supports,
Figure 2 is a schematic top plan, partially sectional, view of the device of Figure 1,
Figure 3 is an enlarged-scale sectional view made according to line III-III of Figure 1 in the migration chamber in which a support for an agarose strip is contained,

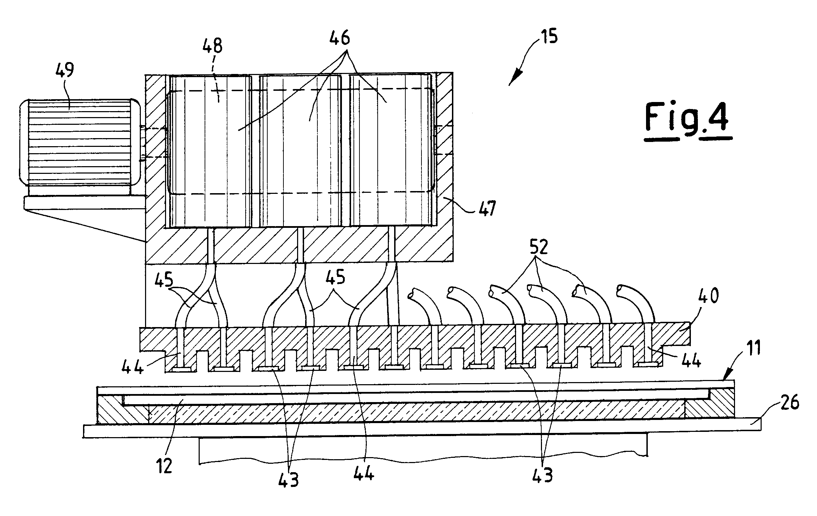

Figure 4 is an enlarged-scale sectional view of the detail along the section line IV-IV of Figure 1,
Figure 5 is an enlarged-scale partial view of the tray of the migration chamber of Figure 1 with its operating way being shown,
Figure 6 is an enlarged-scale top plan view of the dispensing member used to dispense the antisera, shown in the detail of Figure 4,
Figure 7 is an enlarged-scale sectional view of a second embodiment of plate for the device according to the present invention, in which both the steps of migration and development treatment with the reactant can be carried out; and
Figure 8 is a bottom plan view of the only plate of Figure 7.

Referring to the accompanying figures, a device for processing electrophoretic agarose supports is displayed, which can be either used on a machine for automatic processing of said supports, or individually (i.e., in a standalone way), e.g., in order to develop (serum and protein) immunoimmobilizing methods, serum proteins assays, or to perform serum multifractionation or similar methods.

The device for processing electrophoretic supports of agarose is capable of receiving a carrier frame (11) containing a support, or strip, of agarose (12) to be processed.

The device comprises a bearing framework (13), inside which one or two compartments (14, 15) are provided in order to perform either migration only, or to apply antisera or reactants, or also to perform both above cited steps.

For display simplicity, the tanks for the several liquids used in the treatment, the elements for driving the movement of the liquid means or reactants, and the processor performing the task of correlating the motions of the several devices, some motors, and so forth, are not displayed in the figures.

The bearing framework (13), in its portion which can be defined as being the "rear portion", comprises a conveyor means (16) which causes the carrier frame (11) to move longitudinally to come in front of either of compartments (14, 15) of the device. This conveyor means (16) is, e.g., of the type with pusher means (17) driven by a shaft (18) installed longitudinally to the framework (13), and motor-driven.

The movement of the carrier frame (11), caused by the conveyor means (16) towards the front portion of the framework (13) takes place thanks to the presence of a transversal conveyor means. This transversal conveyor means is constituted by a saddle (19) capable of translating along two guide shafts (20) installed transversely to the framework (13) and constrained to it. With said saddle (19) a rear pusher element (21) and a front pusher element (22) are integral and suitable for getting engaged at corners of the carrier frame (11). To opposite sides of said saddle (19) the ends are fastened of a closed-loop rope (23) running around pulleys (24) and driven by a motor (25) suitable for causing said saddle to reciprocate along the desired stroke, i.e., with a stroke length equating the length of the carrier frame (11).

In the front portion a support plane (26) is provided above which the carrier frame (11) rests.

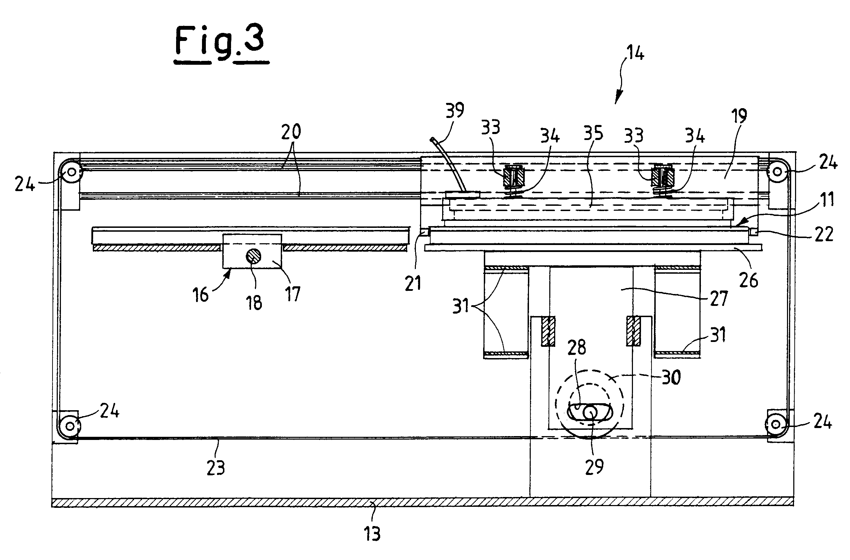

At its bottom face, the support plane (26) is fastened to an underlying plate (27) through which a slot (28) is provided -- and shown in its rest position in Figure 3. Inside the slot (28) a pin (29) gets engaged, which is eccentrically mounted on a motor (30). It will therefore be understood that a rotation of said pin (29), caused by the enabling of the motor (30), drives the plate (27) to move upwards/downwards, with the support plane (26) being consequently caused to move upwards/downwards. The guide and preservation of parallelism during such upwards/downwards movements are supplied by two pairs of blades (31) mutually constrained by crosspieces and, at one of their ends, constrained to a vertical side wall (32) of the framework (13).

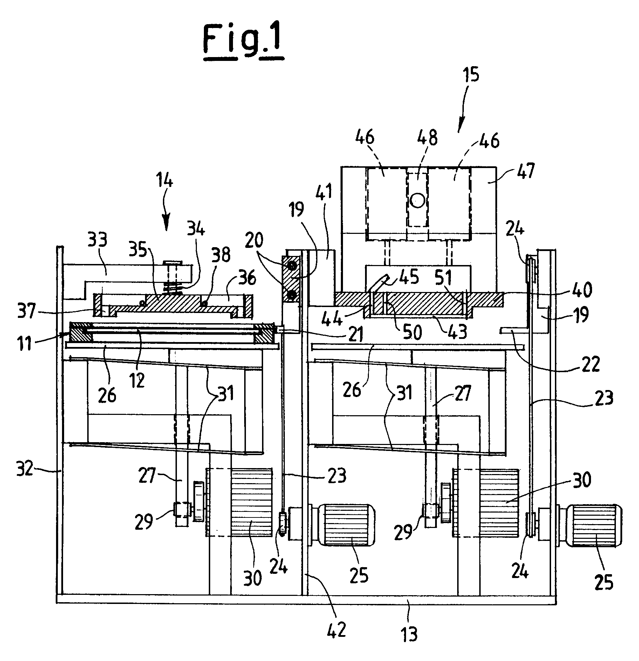

This structure is provided in both compartments (14, 15) disclosed. In particular in the first compartment (14), according to the embodiment exemplified in Figures 1-3 and 5, the unit which realizes the migration step is installed.

For that purpose, in this first compartment (14), in its front portion, a migration chamber is realized above the support plane (26) which can be driven to move upwards/downwards as disclosed above.

The migration chamber is constituted by a "U"-shaped arm (33) cantilevering from the wall (32) of the compartment (14), to which it is fastened, and bearing, with springs (34) being interposed, a plate (35) which makes a part of the migration chamber. This plate (35), or plate element extending above the support plane (26), defines a migration chamber when the support frame (11), with the agarose strip (12) -- placed on the support plane (26) -- to which sera or samples have been preliminarily applied, is brought into intimate contact with said plate (35). The springs 34 will secure that the parts will realize a better contact, under tight seal conditions, on agarose strip.

In fact, in the plate (35) two channel-like grooves (36) are provided which are closed at their ends, are separate from each other and extend according to the longitudinal direction of agarose strip (12), i.e., according to the direction along which the several serum samples are applied. These channel-like grooves (36) display a wide opening directed upwards and are connected with small openings (37), also channel-like and opening downwards. Inside each of said channel-like grooves (36) there is installed a longitudinally running electrode (38) and above said channel-like grooves a pair of hoses (39) are addressed which are connected with one or two tank(s) designed to store buffer solutions (not displayed in the drawings). Inasmuch as said channel-like grooves are separate, for each of them different buffer solutions can be also used, i.e., an anodic buffer solution and a cathodic buffer solution.

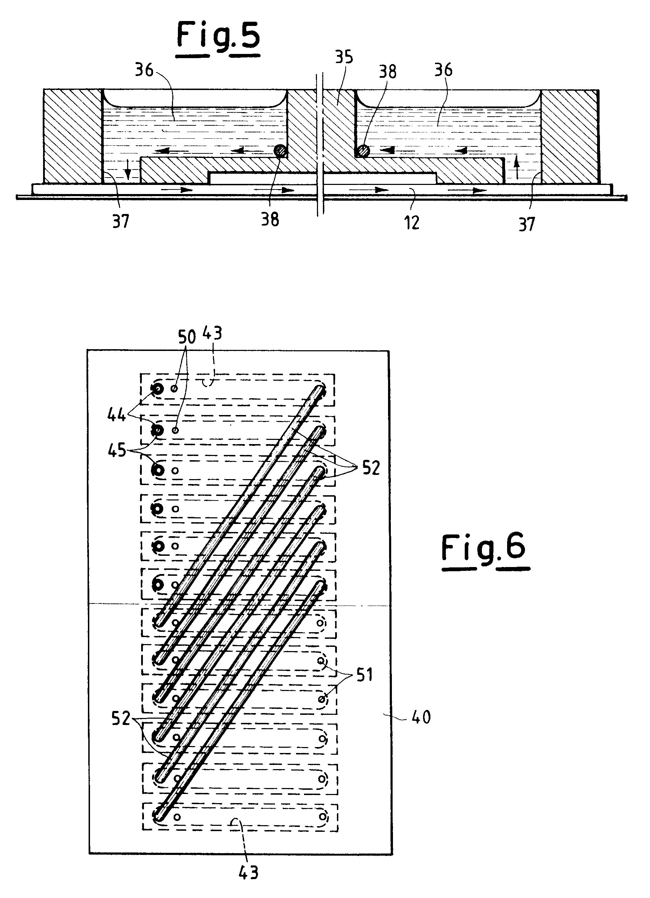

It will be seen, perhaps more clearly from Figure 3, or from the schematic view of Figure 5, that the agarose strip (12) is used as a gasket to seal the channel-like grooves (36) and the underlying openings (37) containing the buffer solution. The so obtained electrical contact is an optimal one because it is based on the direct contact between the buffer solution and the strip of agarose.

The electrodes (38) are respectively connected with a positive voltage source and a negative voltage source and the buffer solution contained inside both channel-like grooves (36) comes into contact with opposite terminal side edges of the agarose strip (12). Thus, the phenomenon of electrophoretic migration takes place as schematically shown in Figure 5.

During the migration, the current lines of the electrical field applied to both agarose support or strip ends, cause the migration phenomenon. The current lines are parallel to each other thanks to the optimal realization of the electrical bridge between the buffer solution and the ends of agarose strip (Figure 5).

As stated, in order that such a migration may take place, the support plane (26) must be suitable for being vertically moved upwards, and the channel-like grooves must be filled with buffer solution which, when migration is ended, will be sucked again back into the purposely provided tanks, not shown in the drawings, by means of suitable means, through relevant hoses (39).

When such a step of processing has come to its end, and the support plane (26) has been lowered again, the carrier frame resting on it is returned back to the rear portion of the apparatus by said transversal conveyor means until it comes above the longitudinal conveyor means (16).

Now, the pusher element (17) will shift the carrier frame (11) to the subsequent compartment (15) of the device of this first embodiment of the invention.

From the rear portion of the compartment (15), through a second transversal conveyor means -- similar to the one already seen -- the carrier frame (11) is moved onto a second support plane (26) which also can be driven to move upwards/downwards, like the first support plane.

Over the second support plane (26) a unit is provided for dispensing antisera or reactants. Also this unit is realized as a plate element lying above the movable support plane (26). Also this unit comprises a plate (40) which is laterally constrained by an arm (41) to a vertical wall (42) of the compartment (15). In its bottom surface, this plate (40) has a set of micro-hollows (43), e.g., of rectangular shape and opened downwards, which are connected through a first set of through-bores (44) with the upper surface of the plate (40). Inside the bores (44) hoses or capillaries (45) can be entered for feeding antisera or reactants.

Antisera are contained, e.g., inside containers (46) realized as small bottles of plastics material, or another, anyway deformable, material. The containers can be positioned inside a rigid box-like element (47) inside which a motor (49)-driven cam shaft (48) is installed. The cam shaft (48) automatically exerts, on command, a compression action on containers (46), causing selected amounts of antisera to be released from the containers inside which they are stored.

With said containers (46), arranged in upside-down position inside the rigid box-like element (47), the glass capillaries or hoses (45) are connected.

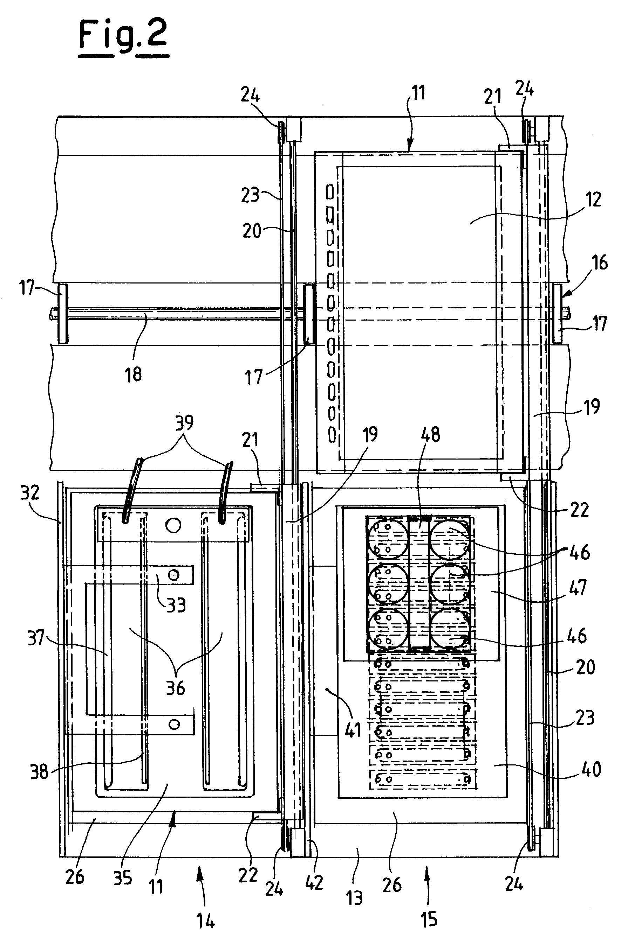

Furthermore, as it will be seen from Figure 2, at each of said micro-hollows (43) a second through-bore (50) is provided which extends from the upper surface to the lower surface of plate (40). In this second set of through-bores (50) further hoses -- not displayed in figures -- can be entered, e.g., for physiological rinsing solution.

Similarly to the preceding case, it should be observed that when it is driven to move upwards, the support plane (26) defines a plurality of micro-chambers longitudinally arranged to the agarose strip. Said micro-chambers are realized when the carrier frame (11) with the strip of agarose (12) on which the migration was carried out, is brought into tight seal contact with the plate (40) and the relevant micro-hollows (43).

Thus an innovation in this step is accomplished because the reaction of the antisera subsequently coming from the containers, takes place inside a closed micro-chamber, with no contact with air. Under this condition, the anti serum density remains constant and the phenomenon of absorption by the strip (12) throughout the reaction time is favoured. This condition causes the bonds between antigen and antibody (composing the serum and the antiserum respectively) to be formed in a larger number thanks to the greater penetration of antiserum into agarose gel; and as it evidences exactly these bonds, the subsequent staining will be more evident, with a higher sensitivity resulting for the test.

Of course, in this unit, after antisera are fed in the required amount to the strip (12), a new rotation of the cam shaft (48) in reversed direction will cause the nearly total amount of antiserum to return back to the containers (46), with the subsequent step being made easier.

Thereafter, through hoses (45) physiological solution for micro-chambers and micro-hollows (43) rinsing is circulated. For that purpose, at the other end of micro-hollows (43) a further set of through-bores (51) are provided which serve to drain the physiological rinsing solution. Said further through-bores (51) are positioned facing the first set of respective bores (44).

Figure 6 shows that, according to an alternative use modality, further capillaries (52) can connect a first set of six micro-chambers with a second set of six micro-chambers. This connection allows the circulation between both sets to take place with only the first set of micro-chambers being directly fed with both antisera and physiological rinsing solution.

When also this step is over, the carrier frame (11) with the agarose strip (12) on it is returned back to the rear portion of the compartment, in order to be sent to a further unit, such as, e.g., a rinsing unit, a staining unit, and so forth, not displayed in Figures.

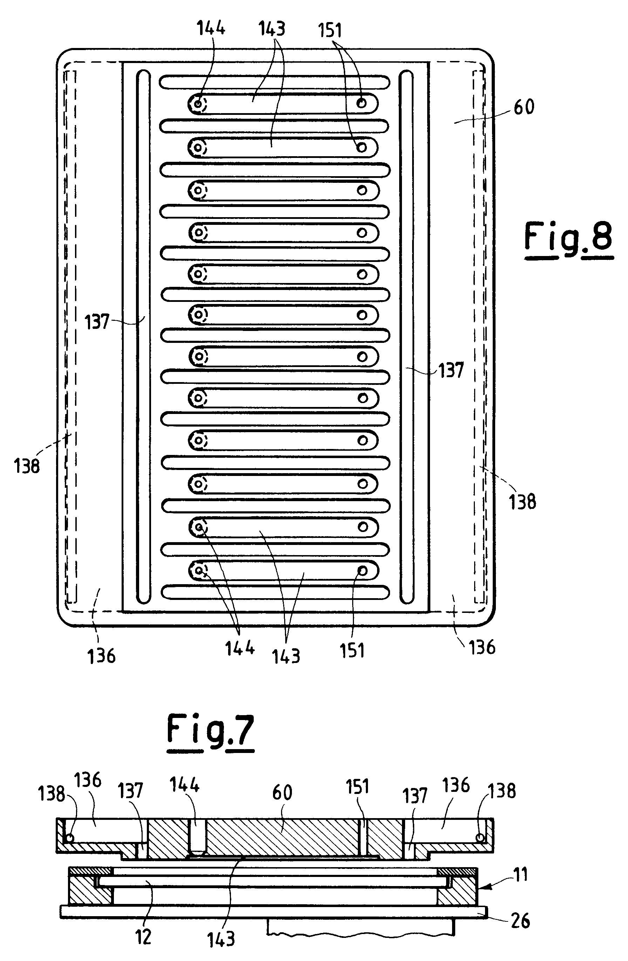

Providing one pair of lined-up compartments for the migration and processing with reactants or antisera is a first embodiment which can be replaced by using a plate like the one shown in Figures 7 and 8.

In this case, a plate (60) is provided which is able to act as both the migration chamber and the processing chamber with antiserum or a suitable reactant.

In the example shown, the plate (60) comprises two channel-like grooves (136) closed at both ends, separate from each other and arranged according to the longitudinal direction of agarose strip (12), i.e., according to the same direction of application of the several antiserum samples. These channel-like hollows (136) display a wide upwards-directed opening and are connected with small, also channel-like, downward-directed openings (137). Inside each of channel-like hollows (36) there is longitudinally arranged an electrode (138) and above same hollows there is a pair of hoses leading to them, connected with tanks destined to store buffer solutions (not shown in figures).

Furthermore, in this plate (60), in its lower surface, a plurality of micro-hollows (143) are provided, e.g., elongated, oval-shaped micro-hollows opening downwards, which, through two sets of through-bores (144) and (151), provide at the ends of said micro-hollows (143) and pairwise facing each other, are connected with the upper surface of plate (60). Inside the bores (144), different types of antisera or reactants can be applied, coming from a suitable dispenser unit equipped with glass or stainless steel capillaries, separately installed from said plate, not displayed.

In that way, in one single plate the possibility is supplied of performing two distinct steps of an electrophoretic assay/processing procedure or immunoimmobilizing method, as disclosed hereinabove.

Both this alternative embodiment with one single plate and that embodiment in which two separate plates in two compartments are provided, make it possible the use to be avoided of masks or other devices which were necessary during the step of application of the sera, as well as of the antisera or reactants. Furthermore, the unreliability is avoided which is caused by the use of the masks used heretofore.

Furthermore, in both cases the advantage is provided consisting in that the sample migration and the reactions with the antisera or reactant are carried out inside a closed chamber from which air is excluded. Under such a condition, the liquid processing means retain their original density, thus favouring the phenomenon of absorption thereof in the strip of agarose throughout the reaction time.

This condition causes an increase in number of bonds formed between antigen and antibody (i.e., the components of serum and antiserum) because antiserum penetration into the gel strip occurs to a greater extent; and as the colour development evidences exactly these bonds, the subsequent staining will be more evident, with a higher sensitivity resulting for the test.

Furthermore, in this way any possibilities of mutual pollution of reactant/anti sera and sample or serum residues are excluded.

During the migration step, loading and draining the buffer solution are directly performed inside the so realized chamber with no need for using bridges of sponge or butyl paper, used up to date.

## Claims

1. Device for processing the electrophoretic supports of agarose in which to said agarose supports or strips samples to be assayed have been applied which must be processed with suitable liquid processing means or reactants, which is characterized in that it comprises a framework (13) inside which at least one support plane (26) is provided which is suitable for receiving a carrier frame (11) for supporting a strip of agarose (12), and is vertically (i.e., upwards and/or downwards) movable by means of relevant drive means (27, 28, 29, 30) towards/from at least one overhanging plate element (35, 40, 60), with the latter being constrained to said framework (13) and being suitable for releasing said processing liquid means and/or reactants onto the at least one agarose support or strip (12), once that the carrier frame is brought into contact, under tight seal conditions, with said plate element.

2. Device according to claim 1, characterized in that said at least one overhanging plate element (35, 40, 60) is provided with at least two through-bores (36, 37; 44, 50, 51; 136, 137, 144, 151), mutually opposite and facing to each other at transversal ends of said plate element, provided between the upper surface and the bottom surface respectively, of said plate, and connectible with containers for processing liquid means and suitable for being positioned with their bottom end being into contact with said underlying agarose strip.

3. Device according to claim 2, characterized in that inside portions of said at least two through-bores (36, 37; 136, 137) relevant electrodes are installed (38; 138).

4. Device according to claim 3, characterized in that said electrodes (38; 138) are inserted inside said two bores shaped at one side as channel-like grooves (36, 136) longitudinally provided in said upper surface of said plate element (35, 60) with said channel-like grooves (36; 136) extending towards the bottom surface of said plate element into two small longitudinal openings (37, 137).

5. Device according to claim 2, characterized in that said at least two through-bores are two sets of through-bores (44, 51; 144, 151) which extend in the bottom surface of said plate element (40, 60) into micro-hollows (43, 143) connecting mutually facing bores of sais two sets.

6. Device according to claim 5, characterized in that above said plate element (40, 60) there is placed a rigid box-like element (47) designed to house containers (46) for said antisera or reactants, with a drive means (48, 49) being provided acting to selectively deform and release said containers, thus causing said antisera or reactants to be expelled from, or automatically reenter, said containers.

7. Device according to claim 1, characterized in that said framework (13) comprises two compartments (14, 15) each containing a relevant support plane (26), in which, in a first compartment (14) there is installed a plate element (35) in which channel-like grooves (36) are longitudinally provided in said upper surface of said plate element (35) and extend towards the bottom surface of said plate element into two small longitudinal openings (37), with electrodes (38) being provided inside each of said two channel-like openings (36) and in the second compartment (15), respectively, there is installed a plate element (40) in which two sets of through-bores (44, 51) are provided and in the bottom surface of said plate element (40) extend into micro-hollows (43) which connect mutually facing bores of said two bore sets.

8. Device according to claim 7, characterized in that it, in front of each of both said compartments (14, 15), comprises a transversal conveyor means designed to transport a carrier frame (11) carrying said at least one agarose support or strip (12) above, and spaced apart from, said support plane (26).

9. Device according to claim 8, characterized in that said transversal conveyor means for said carrier frame (11) is constituted by a saddle (19) capable of translating along two guide shafts (20) installed transversely to said framework (13) and constrained to it, with said saddle (19) a rear pusher element (21) and a front pusher element (22) being integrally connected and suitable for getting engaged at corners of the carrier frame (11) and, furthermore, to opposite sides of said saddle (19) the ends being fastened of a closed-loop rope (23) running around pulleys (24) and driven by a motor (25) suitable for causing it to reciprocate.

10. Device according to claim 1, characterized in that said support plane (26) is suitable for being moved upwards and/or downwards towards/from said overhanging plate element (35, 40, 60) by means of a plate (27) provided under it, which plate element is provided with a hollow (28) inside which a pin (29) gets engaged, which is eccentrically connected with a relevant drive means (30).
